(19) Europäisches Patentamt
European Patent Office
Office européen des brevets

(11) **EP 3 961 767 A1**

(12) **EUROPEAN PATENT APPLICATION**
published in accordance with Art. 153(4) EPC

(43) Date of publication:
**02.03.2022 Bulletin 2022/09**

(21) Application number: **20794149.3**

(22) Date of filing: **24.04.2020**

(51) International Patent Classification (IPC):
**H01M 4/52** (2010.01)        **H01M 10/30** (2006.01)
**H01M 10/44** (2006.01)       **H01M 10/48** (2006.01)
**H01M 2/38** (2006.01)

(52) Cooperative Patent Classification (CPC):
**H01M 4/52; H01M 10/30; H01M 10/44;**
**H01M 10/48; H01M 50/70;** Y02E 60/10

(86) International application number:
**PCT/JP2020/017866**

(87) International publication number:
**WO 2020/218594 (29.10.2020 Gazette 2020/44)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **26.04.2019 JP 2019086629**

(71) Applicant: **Kyocera Corporation**
**Kyoto-shi, Kyoto 612-8501 (JP)**

(72) Inventor: **KOMURA, Takahiro**
**Kyoto-shi, Kyoto 612-8501 (JP)**

(74) Representative: **Viering, Jentschura & Partner**
**mbB**
**Patent- und Rechtsanwälte**
**Am Brauhaus 8**
**01099 Dresden (DE)**

(54) **SECONDARY BATTERY AND SECONDARY BATTERY SYSTEM**

(57)    A secondary battery according to an embodiment includes a cathode, an anode, and an alkaline aqueous solution. The cathode has an active material containing a nickel compound. The alkaline aqueous solution is in contact with the cathode and the anode. The product of a valence and a molar amount per 1 $dm^3$ of complex ions is -2.0 or less.

FIG. 1

**Description**

Technical Field

The disclosed embodiments relate to a secondary battery and a secondary battery system.

Background Art

In a related art, a flow battery that circulates an electrolytic solution containing an anode active material between a cathode and an anode is known as an example of a secondary battery.
In addition, some secondary batteries contain nickel hydroxide as a cathode active material. The valence and structure of the nickel atom of nickel hydroxide change due to charging and discharging of the secondary battery.

Citation List

Patent Literature

Patent Document 1: JP 2015-173068 A

Summary of Invention

A secondary battery according to one aspect of the present embodiment is provided with a cathode, an anode, and an alkaline aqueous solution. The cathode has an active material containing a nickel compound. The alkaline aqueous solution is in contact with the cathode and the anode. The product of a valence and a molar amount per 1 $dm^3$ of the complex ions is -2.0 or less.

Brief Description of Drawings

FIG. 1 is a diagram illustrating an overview of a secondary battery system according to a first embodiment.
FIG. 2 is a diagram illustrating an example of a cathode structure.
FIG. 3 is a cross-sectional view taken along the line A-A in FIG. 2.
FIG. 4 is a cross-sectional view taken along the line B-B in FIG. 2.
FIG. 5 is a diagram illustrating an example of a change in the form of a nickel compound.
FIG. 6 is a block diagram illustrating a functional configuration of a secondary battery system according to the first embodiment.
FIG. 7 is a diagram illustrating an example of a connection between electrodes of a secondary battery according to the first embodiment.
FIG. 8 is a diagram illustrating an overview of a secondary battery system according to a second embodiment.

Description of Embodiments

Embodiments of a secondary battery and a secondary battery system disclosed in the present application will be described in detail below with reference to the accompanying drawings. Note that the present invention is not limited to the embodiments that will be described below.

First Embodiment

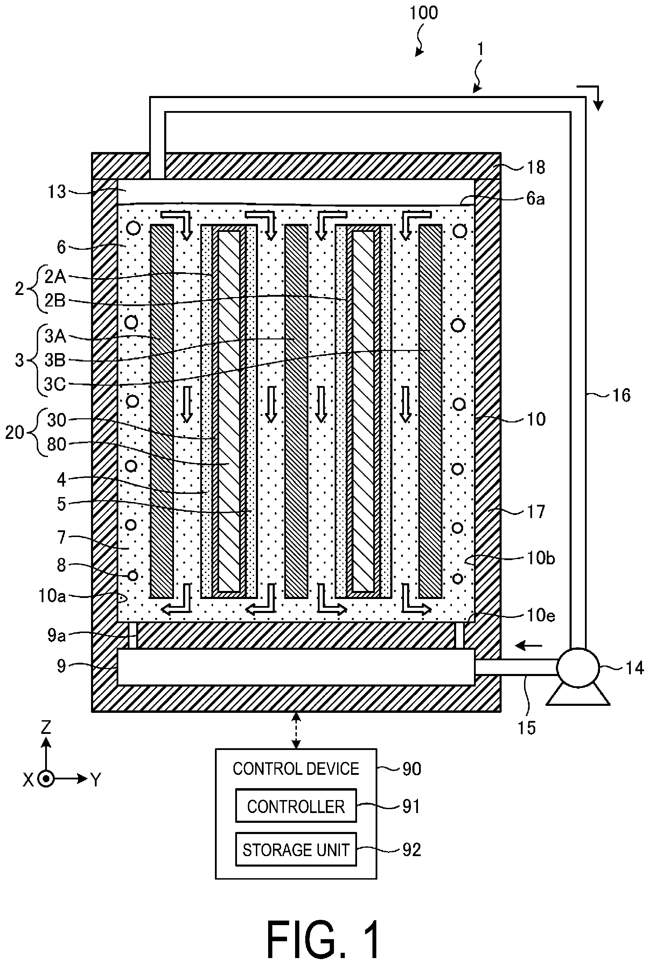

FIG. 1 is a diagram illustrating an overview of a secondary battery system according to a first embodiment. A secondary battery system 100 illustrated in FIG. 1 includes a secondary battery 1 and a control device 90. The secondary battery 1 includes a reaction unit 10, a generation unit 9, and a supply unit 14, all housed in a casing 19. The reaction unit 10 includes a cathode 2, an anode 3, diaphragms 4, 5, and an alkaline aqueous solution 6. The secondary battery 1 is a device that is configured to cause the alkaline aqueous solution 6 housed in the reaction unit 10 to flow by causing gas bubbles 8 generated by the generation unit 9 to float in the alkaline aqueous solution 6. Thus, it is also referred to as a flow battery. The generation unit 9 is an example of a flow device. FIG. 1 illustrates an embodiment in which the secondary battery 1 is a nickel zinc battery, but the present invention is not limited to a nickel zinc battery. The secondary battery 1 may be, for example, a lead storage battery, a lithium ion secondary battery, a lithium ion polymer battery, a nickel hydrogen secondary battery, a nickel cadmium secondary battery, a lithium air secondary battery, a sodium ion secondary battery, a sodium sulfur battery, or a redox flow battery.

For the sake of clarity, FIG. 1 illustrates a three-dimensional orthogonal coordinate system including a Z-axis for which the vertically upward direction is the positive direction and the vertically downward direction is the negative direction. Such orthogonal coordinate systems may also be presented in other drawings used in the description below. Components that are the same as those of the secondary battery system 100 illustrated in FIG. 1 are assigned the same reference signs, and descriptions thereof are omitted or simplified.

[Secondary battery]

The cathode 2 has one or a plurality of cathode structures 20. The cathode structure 20 includes a cathode active material layer 30 and a current collector member 80. Details of the cathode structure 20 will be described later.

The anode 3 includes an anode active material as a metal. For example, a metal plate of a material such as stainless steel or copper, or a stainless steel or copper plate for which the surface has been plated with nickel, tin, or zinc can be used as the anode 3. Furthermore, a stainless steel or copper plate for which the surface has been plated and then partially oxidized may also be used as the anode 3.

The cathode 2 includes cathodes 2A and 2B. The anode 3 includes anodes 3A to 3C. In the cathode 2 and the anode 3, the anode 3A, the cathode 2A, the anode 3B, the cathode 2B, and the anode 3C are arranged in order along the Y-axis direction at predetermined intervals. By providing an interval between the adjacent cathode 2 and anode 3 in this manner, a distribution path for the alkaline aqueous solution 6 between the cathode 2 and the anode 3 is ensured.

The diaphragms 4, 5 are disposed so as to sandwich the cathode 2 from both sides in the thickness direction, that is, in the Y-axis direction. The diaphragms 4, 5 are constituted of a material that allows the movement of ions in the alkaline aqueous solution 6. Specifically, an example of the material of the diaphragms 4, 5 is an anionic conductive material such that the diaphragms 4, 5 have hydroxide ion conductivity. Examples of anionic conductive materials include: gel-like anionic conductive materials having a three-dimensional structure such as an organic hydrogel; inorganic layered double hydroxides; or solid polymeric anionic conductive materials. The solid polymeric anionic conductive material includes, for example, a polymer and at least one compound selected from the group consisting of oxides, hydroxides, layered double hydroxides, sulfate compounds and phosphate compounds, the compound containing at least one element selected from Groups 1 to 17 of the periodic table.

In this case, during charging, the use of such a material reduces incidents of precipitated zinc at the anodes 3A to 3C growing as dendrites (needle-shaped crystals) and penetrating through the diaphragms 4, 5. As a result, incidents of conduction between the mutually facing anode 3 and cathode 2 can be reduced.

The alkaline aqueous solution 6 contains, for example, an alkali metal at an amount of 6 $mol \cdot dm^{-3}$ or greater. The alkali metal is potassium, for example. Specifically, for example, an aqueous solution from 6 to 13 $mol \cdot dm^{-3}$ of potassium hydroxide can be used as the alkaline aqueous solution 6. In addition, an alkali metal such as lithium or sodium may be added as a hydroxide (lithium hydroxide, sodium hydroxide) for the purpose of suppressing oxygen generation.

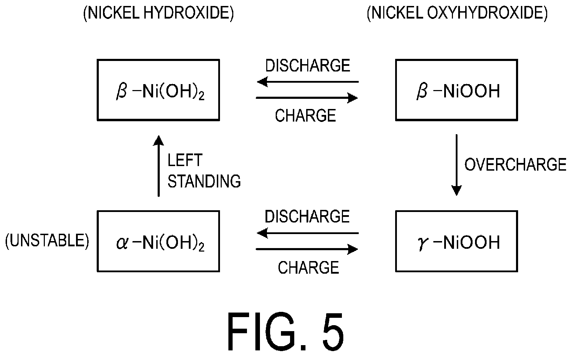

The alkaline aqueous solution 6 also contains a complex ion for which a product of the valence (number of charges) and the molar amount per 1 $dm^3$ is equal to or less than -2.0. The charging capacity can be improved by configuring the alkaline aqueous solution 6 to contain a predetermined amount of the complex ions in this manner. This point will be described later using FIG. 5.

The alkaline aqueous solution 6 may also contain a powder 7. The powder 7 contains a metal corresponding to the complex ions in the alkaline aqueous solution 6. For example, if the alkaline aqueous solution 6 contains $[Zn(OH)_4]^{2-}$, the powder 7 contains zinc. Specifically, the powder 7 is, for example, a metal oxide (for example, zinc oxide) or a metal hydroxide (for example, zinc hydroxide), processed or produced in a powder form. Ordinarily, the powder 7 is readily dissolved in an alkaline aqueous solution. However, the powder 7 may be dispersed or suspended in the saturated alkaline aqueous solution 6 of the metal species without being dissolved. The powder 7 may also be precipitated, for example. When the alkaline aqueous solution 6 is left to stand for an extended period of time, most of the powder 7 precipitates in the alkaline aqueous solution 6, for example. However, if convection or the like occurs in the alkaline aqueous solution 6, some of the precipitated powder 7 can be dispersed or suspended in the alkaline aqueous solution 6. That is, the powder 7 is movably present in the alkaline aqueous solution 6. Here, "movable" does not mean that that the powder 7 can move only in a localized space between the other powders 7 present in the surrounding area, but instead, means that the powder 7 moves to another position in the alkaline aqueous solution 6, and thereby the powder 7 is exposed to the alkaline aqueous solution 6 at a position other than the initial position. Furthermore, the term movable also means that the powder 7 can move to the vicinity of both the cathode 2 and the anode 3, or that the powder 7 can move almost anywhere in the alkaline aqueous solution 6 present in the casing 19. When the complex ions dissolved in the alkaline aqueous solution 6 are consumed, the powder 7 suspended or precipitated in the alkaline aqueous solution 6 dissolves such that a concentration of the complex ions present in the alkaline aqueous solution 6 approach the saturation concentration, and thereby the powder 7 and the alkaline aqueous solution 6 remain in a mutually equilibrium state. The powder 7 can be used to adjust the amount of metal dissolved in the alkaline aqueous solution 6 and maintain high ionic conductivity of the alkaline aqueous solution 6.

The gas bubbles 8 are constituted by, for example, a gas that is inert to the cathode 2, the anode 3, and the alkaline aqueous solution 6. Examples of such a gas include nitrogen gas, helium gas, neon gas, and argon gas. When the gas bubbles 8 of an inert gas are generated in the alkaline aqueous solution 6, modification of the alkaline aqueous solution 6 can be reduced. Furthermore, for example, deterioration of the alkaline aqueous solution 6 containing a zinc species can be reduced, and the ionic conductivity of the alkaline aqueous solution 6 can be maintained at a high value. Note that the gas may contain air.

The generation unit 9 is disposed below the reaction unit 10. The generation unit 9 is internally hollow so as to temporarily store a gas supplied from the supply unit 14 described below. Furthermore, an inner bottom 10e of the reaction unit 10 is disposed so as to cover the hollow portion of the generation unit 9, and serves as a top plate of the generation unit 9.

Furthermore, the inner bottom 10e includes a plurality of discharge ports 9a arranged along the X-axis direction and the Y-axis direction. In a plan view, the discharge ports 9a are disposed between an inner wall 10a and the anode 3A and between the anode 3C and an inner wall 10b. The generation unit 9 generates gas bubbles 8 in the alkaline aqueous solution 6 by discharging, from the discharge ports 9a, the gas supplied from the supply unit 14.

Here, the diameter of the gas bubbles 8 floating in the alkaline aqueous solution 6 can be, for example, from 0.01 mm to 3 mm. If the diameter of the gas bubbles 8 is smaller than 0.01 mm, the alkaline aqueous solution 6 accommodated in the reaction unit 10 cannot be efficiently flowed, and the possibility of incidents of conduction between the cathode 2 and the anode 3 may not be easily reduced. Furthermore, if the diameter of the gas bubbles 8 exceeds 3 mm, for example, while floating, the gas bubbles 8 may come into contact with the inner wall 10a or the anode 3a and thereby reduce the flow efficiency of the alkaline aqueous solution 6. Thus, the possibility of incidents of conduction between the cathode 2 and the anode 3 may not be easily reduced. Note that the "diameter of the gas bubbles 8" referred to here is the size in the X-axis direction when the gas bubbles 8 are photographed from above or from the side of the reaction unit 10 using, for example, a high speed camera or the like.

The discharge ports 9a each have a diameter of, for example, from 5 $\mu$m to 500 $\mu$m. Additionally, for example, each discharge port 9a may have a diameter of from 10 $\mu$m to 500 $\mu$m. The diameter of the discharge port 9a may be regulated in this manner, and thus the problem of the alkaline aqueous solution 6 and the powder 7 entering the hollow portion of the interior of the generation unit 9 from the discharge ports 9a can be reduced. In addition, when the diameter is defined in this manner, a pressure loss suitable for formation of the gas bubbles 8 is suitably imparted to the gas discharged from the discharge ports 9a.

Moreover, the interval (pitch) along the X-axis direction of the discharge ports 9a may be, for example, from 2.5 mm to 50 mm. In addition, the interval (pitch) along the X-axis direction of the discharge ports 9a may be, for example, from 2.5 mm to 10 mm. However, the discharge ports 9a are not limited in their size or interval as long as the discharge ports 9a are disposed such that the formed gas bubbles 8 can be appropriately flowed between each mutually facing cathode 2 and anode 3.

The gas bubbles 8 formed from the gas supplied into the alkaline aqueous solution 6 from the discharge ports 9a of the generation unit 9 float in the alkaline aqueous solution 6 between both ends in the Y-axis direction, and more specifically, between the anode 3A and the inner wall 10a of the casing 17, and between the anode 3C and the inner wall 10b of the casing 17. The gas floated upward as gas bubbles 8 in the alkaline aqueous solution 6 disappears at a liquid surface 6a of the alkaline aqueous solution 6, and forms a gas layer 13 positioned between an upper plate 18 and the liquid surface 6a of the alkaline aqueous solution 6.

In addition, as upward floatation of the gas bubbles 8 proceeds as described, an upward liquid flow is generated in the alkaline aqueous solution 6. The alkaline aqueous solution 6 flows upward from the lower portion of the reaction unit 10 between the inner wall 10a and the anode 3A, and between the anode 3C and the inner wall 10b. And the alkaline aqueous solution 6 flows downward from the upper portion between the anode 3A and the cathode 2A, between the cathode 2A and the anode 3B, and between the anode 3B and the cathode 2C.

Note that the discharge ports 9a may be arranged such that the gas bubbles 8 float upward between the cathode 2 and the anode 3. In such a case, the alkaline aqueous solution 6 flows upward from the lower portion of the reaction unit 10 between the cathode 2 and the anode 3 where the gas bubbles 8 float upward. The alkaline aqueous solution 6 also flows downward from the upper portion of the reaction unit 10 between the inner wall 10a and the anode 3A and between the anode 3C and the inner wall 10b.

The upper plate 18 and the casing 19 are configured from a resin material having alkaline resistance and an insulating property, and examples of the resin material include polystyrene, polypropylene, polyethylene terephthalate, polytetrafluoroethylene, and polyvinyl chloride. The upper plate 18 and the casing 19 are preferably configured from a mutually identical material, but may be configured from different materials. Alternatively, the generation unit 9 may be disposed inside the reaction unit 10.

The supply unit 14 supplies a gas collected from the interior of the casing 19 via a piping 16 to the generation unit 9 via a piping 15. The supply unit 14 is, for example, a pump (gas pump), a compressor, or a blower, capable of transferring a gas. When the supply unit 14 has better air-tightness, the secondary battery 1 is resistant to reduction in power generation performance, which may be caused by leakage to the outside of water vapor derived from the gas or the alkaline aqueous solution 6.

Here, an example of an electrode reaction in the secondary battery 1 will be described using, as an example, a nickel zinc battery in which nickel hydroxide is used as the cathode active material and zinc is used as the anode active material. The reaction formulas at the cathode 2 and the anode 3 during charging are as follows.

cathode:

$$Ni(OH)_2 + OH^- \rightarrow NiOOH + H_2O + e^-$$

anode:

$$[Zn(OH)_4]^{2-} + 2e^- \rightarrow Zn + 4OH^-$$

In general, there is a concern that, in association with these reactions, dendrites generated at the anode 3 may grow toward the cathode 2 side, and an incident of conduction may occur between the cathode 2 and the anode 3. As is clear from the reaction formulas, as zinc precipitates due to charging at the anode 3, the concentration of $[Zn(OH)_4]^{2-}$ in the vicinity of the anode 3 decreases. Furthermore, the phenomenon of decrease in the concentration of $[Zn(OH)_4]^{2-}$ in the vicinity of the precipitated zinc is one of the causes of growth as dendrites. In other words, the zinc species $[Zn(OH)_4]^{2-}$ in the alkaline aqueous solution 6 is maintained at a high concentration by replenishment of the $[Zn(OH)_4]^{2-}$ in the alkaline aqueous solution 6 consumed during charging. As a result, the growth of dendrites is reduced, and the potential for incidents of conduction between the cathode 2 and the anode 3 is reduced.

In the secondary battery 1, gas is supplied from the discharge ports 9a of the generation unit 9 into the alkaline aqueous solution 6 to generate gas bubbles 8. The gas bubbles 8 float upward in the alkaline aqueous solution 6 from the inner bottom 10e of the reaction unit 10. Additionally, as the gas bubbles 8 float upward, the alkaline aqueous solution 6 flows upward from the lower portion of the reaction unit 10, between the cathode 2 and the anode 3.

As a result, when the $[Zn(OH)_4]^{2-}$ in the alkaline aqueous solution 6 is consumed by charging, the zinc in the powder 7 is dissolved so as to compensate the consumption thereof, and thereby the alkaline aqueous solution 6 containing a high concentration of the $[Zn(OH)_4]^{2-}$ is replenished in the vicinity of the anode 3. Therefore, the $[Zn(OH)_4]^{2-}$ in the alkaline aqueous solution 6 can be maintained at a high concentration, and the potential for incidents of conduction between the cathode 2 and the anode 3 in association with the growth of dendrites can be reduced.

Note that examples of the powder 7 containing zinc include, in addition to zinc oxide and zinc hydroxide, metal zinc, calcium zincate, zinc carbonate, zinc sulfate, and zinc chloride, and in particular, zinc oxide and zinc hydroxide can be used.

Furthermore, at the anode 3, Zn is consumed through discharging, and $[Zn(OH)_4]^{2-}$ is formed. However, in the alkaline aqueous solution 6, the $[Zn(OH)_4]^{2-}$ is already saturated, and therefore the excess $[Zn(OH)_4]^{2-}$ precipitates as ZnO. At this time, the zinc consumed at the anode 3 is zinc that is deposited on the surface of the anode 3 during charging. Therefore, unlike a case in which charging and discharging are repeated using an anode originally containing a zinc species, so-called shape changing in which the surface shape of the anode 3 changes does not occur. As a result, with the secondary battery 1 according to the first embodiment, degradation over time of the anode 3 can be reduced. Note that depending on the state of the alkaline aqueous solution 6, the zinc species that is precipitated from the excess $Zn(OH)_4]^{2-}$ may be $Zn(OH)_2$ or a mixture of ZnO and $Zn(OH)_2$.

[Cathode structure]

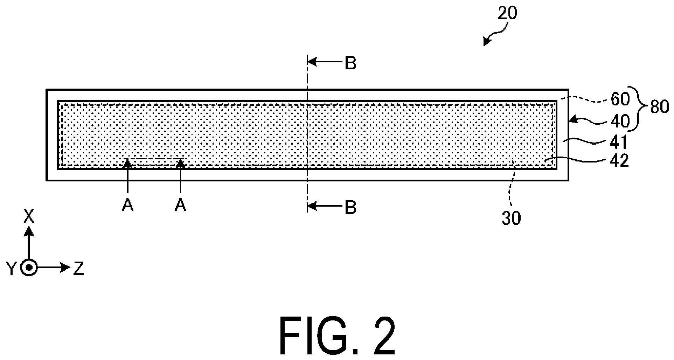

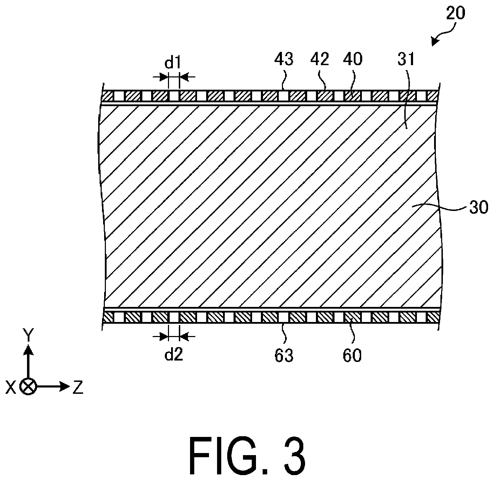

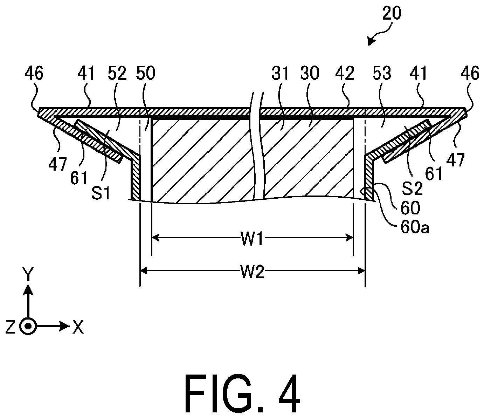

Next, a cathode structure 20 will be described using FIGS. 2 to 4. FIG. 2 is a diagram illustrating an example of a cathode structure. FIG. 3 is a cross-sectional view taken along the line A-A in FIG. 2, and FIG. 4 is a cross-sectional view taken along the line B-B in FIG. 2.

The cathode structure 20 is a member having a box shape or a pocket shape. The cathode structure 20 includes a cathode active material layer 30 and a current collector member 80 that houses the cathode active material layer 30.

The cathode active material layer 30 includes an active material 3 1. The active material 31 is, for example, in a granular form containing a nickel compound. The nickel compound is one or both of nickel hydroxide and nickel oxyhydroxide, for example. The nickel compound includes at least two or more of the following: α-nickel hydroxide, β-nickel hydroxide, β-nickel oxyhydroxide, or γ-nickel oxyhydroxide. Furthermore, the relationship in terms of content of the α-nickel hydroxide, the β-nickel hydroxide, the β-nickel oxyhydroxide, and the γ-nickel oxyhydroxide satisfies, for example, any one of the following relational expressions.

Relational Expression 1: α-nickel hydroxide > β-nickel hydroxide
Relational Expression 2: α-nickel hydroxide > β-nickel oxyhydroxide
Relational Expression 3: γ-nickel oxyhydroxide > β-nickel oxyhydroxide
Relational Expression 4: γ-nickel oxyhydroxide > β-nickel hydroxide

Furthermore, from 45 mol% to 90 mol% of the nickel hydroxide and the nickel oxyhydroxide in the active material 31 may be α-nickel hydroxide and a γ-nickel oxyhydroxide. Here, the nickel hydroxide and the nickel oxyhydroxide contained in the active material 31 are further described using FIG. 5.

FIG. 5 is a diagram illustrating an example of a change in the form of the nickel compound. As illustrated in FIG. 5, the β-nickel hydroxide (β-Ni(OH)$_2$) included as the active material 31 in the cathode 2 is converted to β-nickel oxyhydroxide (β-NiOOH) through charging of the secondary battery 1, and β-NiOOH is converted back to β-Ni(OH)$_2$ through discharging of the secondary battery 1. The charging/discharging reaction between the β-β species is the electrode reaction described above which is commonly used in the secondary battery 1.

Additionally, β-NiOOH is converted to γ-nickel oxyhydroxide (γ-NiOOH) due to overcharging of the secondary battery 1. The γ-NiOOH is converted to α-nickel hydroxide (α-Ni(OH)$_2$) through discharging of the secondary battery 1, and the α-Ni(OH)$_2$ is converted back to γ-NiOOH through charging of the secondary battery 1.

In other words, in the secondary battery 1 that uses nickel hydroxide as the active material 31, two types of charging/discharging reactions can be used, namely a morphological change between β-Ni(OH)$_2$ ⇔ β-NiOOH and a morphological change between α-Ni(OH)$_2$ ⇔ γ-NiOOH. In particular, in charging and discharging between α-Ni(OH)$_2$ ⇔ γ-NiOOH, which is a multiple electron reaction, the charge/discharge amount per unit molar amount is approximately 1.5 times that of charging and discharging between β-Ni(OH)$_2$ ⇔ β-NiOOH, which is a one-electron reaction. Therefore, with the secondary battery 1 that utilizes the charging/discharging reaction between α-Ni(OH)$_2$ ⇔ γ-NiOOH, an improvement in the charging capacity can be anticipated compared to a case in which only the charging/discharging reaction between β-Ni(OH)$_2$ ⇔ β-NiOOH is used.

However, α-Ni(OH)$_2$ is an unstable material, and when left standing, will convert to the relatively stable β-Ni(OPH)$_2$ Also, when α-Ni(OH)$_2$ is converted to β-Ni(OH)$_2$, α-Ni(OH)$_2$ (or γ-NiOOH) is not formed unless overcharging to a predetermined voltage value occurs. As a result, the charging/discharging reaction between α-Ni(OH)$_2$ ⇔ γ-NiOOH cannot be used in the normal charging/discharging reaction.

Therefore, with the secondary battery 1 according to the first embodiment, the alkaline aqueous solution 6 contains complex ions for which the product of the valence and the molar amount per 1 dm$^3$ is -2.0 or less, and in particular from -5.0 to -2.5. Since the valence of the complex ions is negative, the product of the valence and the molar amount is negative. Furthermore, as the molar amount of the complex ions increases, the product of the valence and the molar amount becomes smaller.

The complex ions are dissolved, for example, as hydroxide complex ions in the alkaline aqueous solution 6, which is an alkaline solution. The complex ions include one or more of, for example, Zn, Al, Sn, Ga, Pb, In, Bi, or Ge. Zn can be dissolved in the alkaline aqueous solution 6 as [Zn(OH)$_4$]$^{2-}$. Furthermore, Al, Sn, Ga, Pb, In, Bi, and Ge are each amphoteric elements, and can be dissolved in the alkaline aqueous solution 6 as, for example, [Al(OH)$_4$]$^-$, [Sn(OH)$_6$]$^{2-}$, [Ga(OH)$_4$]$^-$, [Pb(OH)$_4$]$^{2-}$, [In(OH)$_4$]$^-$, and [Ge(OH)$_4$]$^{2-}$.

When the alkaline aqueous solution 6 contains a prescribed amount of the complex ions in this manner, a morphological change of α-Ni(OH)$_2$, which is the active material 31 in the cathode 2 immersed in the alkaline aqueous solution 6, into β-Ni(OH)$_2$ is suppressed, and the charging/discharging reaction between α-Ni(OH)$_2$ ⇔ γ-NiOOH can be repeated. Thus, with the secondary battery 1 according to the first embodiment, the charging capacity can be improved over a long period of time.

Furthermore, as described above, of the Ni(OH)$_2$ and NiOOH included in the active material 31, the content of the α-Ni(OH)$_2$ and γ-NiOOH may be from 45 mol% to 90 mol%. When the content of the α-Ni(OH)$_2$ and γ-NiOOH is less than 45 mol%, for example, the effect of the charging capacity improvement through α-Ni(OH)$_2$ and γ-NiOOH is reduced, and the voltage control of the secondary battery 1 may be difficult. When the content of the α-Ni(OH)2 and γ-NiOOH exceeds 90 mol%, the volume change rate of the cathode active material layer 30 containing the active material 31 increases in association with charging and discharging. This may result in, for example, deterioration in battery performance with repeated charging and discharging.

Note that the cathode active material layer 30 may contain γ-NiOOH as the active material 31, or may contain only β-Ni(OH)$_2$ as the active material 31 in the preparation of the cathode structure 20. For example, for a case in which the cathode active material layer 30 contains only β-Ni(OH)$_2$ as the active material 31, when the full charge in a normal charging/discharging reaction is defined as 100% for example, overcharging to approximately 160% to 200% is preliminarily implemented in advance and some of the $\beta$-Ni(OH)$_2$ has been converted to $\gamma$-NiOOH, and then charging and discharging may be implemented.

The cathode structure 20 is further described with reference again to FIGS. 2 to 4. The active material 31 may contain a metal element besides nickel. Of the metal elements contained in the active material 31, the content of the metal elements other than nickel can be 10 mol% or less, and further 6 mol% or less. When the upper limit of the content of the metal elements other than nickel is implemented in this manner, the content of the nickel compound that significantly contributes to charging and discharging becomes relatively large, and the charging capacity can be improved.

Examples of metal elements other than nickel include magnesium, cadmium, and zinc. The active material 31 may also contain other metal elements, such as cobalt, for example. These metal elements are those that are substituted in the active material 31 and form a solid solution. In other words, metal elements covering the surface of the active material 31 are not included. An example is a case in which the metal elements are present as a second layer other than in the active material 31. The composition of the active material 31 can be measured using, for example, ICP composition analysis. In addition, the content of the metal elements other than nickel in the active material 31 may also be less than or equal to the detection limit.

Moreover, the cathode active material layer 30 may contain a conductor. The conductor increases the conductivity between the active material 31 and the current collector member 80, and reduces energy loss that occurs during charging and discharging at the cathode 2. The conductor may be, for example, a conductive material such as a carbon material or a metal material. From the perspective of versatility, the conductor is, for example, a carbon material. Examples of the carbon material include graphite, carbon black, graphite, and carbon felt. In addition, a nickel metal for example can be used as the metal material. The conductor may be, for example, cobalt metal, manganese metal, or an alloy thereof.

The cathode active material layer 30 may also contain a binder. The binder binds the active materials included in the cathode active material layer 30 to each other, binds the conductors to each other, binds the active materials and the conductors, and contributes to shape retention of the cathode active material layer 30. The binder also increases the adhesiveness between the cathode active material layer 30 and the current collector member 80. A resin material can be used as the binder. Furthermore, the resin material may have alkaline resistance and an insulating property. Examples of resin materials that can be used include polytetrafluoroethylene (PTFE), polyvinyl chloride (PVA), and polyvinylidene fluoride (PVDF).

A mixture of the active material 31, the conductor, and the binder as described above is kneaded, pressurized, and molded to form the cathode active material layer 30. If necessary, a liquid such as water or alcohol may be added to the mixture of the active material, the conductor, and the binder, and after molding, the mixture may be dried to produce the cathode active material layer 30.

Next, the current collector member 80 is described. The current collector member 80 is configured by a plate-shaped member made of nickel metal or a nickel alloy, for example. A metal material, the surface of which has been plated, may also be used as the current collector member 80. The current collector member 80 includes a first member 40 and a second member 60 facing each other in the thickness direction of the cathode active material layer 30. The cathode active material layer 30 is housed between the first member 40 and the second member 60.

As illustrated in FIG. 2, the first member 40 includes a communicating portion 42 and an anchoring portion 41. The communicating portion 42 is a portion that communicates the inside and outside of the cathode structure 20 in which the cathode active material layer 30 is housed, and allows the movement of the alkaline aqueous solution 6 into and out of the cathode structure 20. As illustrated in FIG. 3, a plurality of through-holes 43 that go through the inner surface and the outer surface of the first member 40 are provided in the communicating portion 42.

The anchoring portion 41 is a region that is provided for anchoring the first member 40 and the second member 60 at the peripheral edge of the first member 40. As illustrated in FIG. 4, the first member 40 includes a bent section 47 that is bent at both ends 46 in the X-axis direction, that is, in the width direction. Furthermore, the second member 60 has side edges 61 at both end portions in the X-axis direction, that is, in the width direction. When a side edge 61 of the second member 60 is sandwiched between the anchoring portion 41 and the bent section 47 of the first member 40, and the anchoring portion 41 and the bent section 47 are compressed so as to sandwich the side edge 61 from the outside, the first member 40 and the second member 60 are anchored. Note that in FIG. 4, illustration of the through-holes 43 included in the communicating portion 42 is omitted.

Here, a width W2 in the X-axis direction of a housing section 50 between the first member 40 and the second member 60 can be, for example, 1 mm greater than a width W1 in the X-axis direction of the cathode active material layer 30. When the width W2 of the housing section 50 is defined in this manner, the alkaline aqueous solution 6 can enter between the housing section 50 and an inner surface 60a of the second member 60, and thereby the proportion of the cathode active material layer 30 in direct contact with the alkaline aqueous solution 6 is increased, and diffusion of the alkaline aqueous solution 6 into the cathode active material layer 30 is further enhanced.

Although not illustrated, the first member 40 and the second member 60 can also be anchored in the longitudinal direction of the cathode structure 20 by the same technique used for anchoring in the lateral direction. Anchoring of the first member 40 and the second member 60 is not limited to the illustrated example, and may be implemented by welding, for example. With the first member 40 of the first embodiment, the communicating portion 42 and the anchoring portion 41 are each formed as a continuous portion, but other forms may be used. For example, through-holes 63 may also be provided in the anchoring portion 41 such that a portion or all of the anchoring portion becomes a communicating portion 42 allowing the movement of the alkaline aqueous solution 6.

Furthermore, the first member 40 and the second member 60 have gaps 52, 53 at end portions in the width direction of the cathode active material layer 30, specifically, outside of the housing section 50. Thus, the alkaline aqueous solution 6 (refer to FIG. 1) enters the gaps 52, 53, and thereby the proportion of the cathode active material layer 30 in direct contact with the alkaline aqueous solution 6 is further increased, and the diffusion starting points are increased. As a result, diffusion of the alkaline aqueous solution 6 into the cathode active material layer 30 is further enhanced. Note that a configuration may also be adopted in which only one of the gaps 52, 53 is present, or in which none of the gaps 52, 53 are present.

Further, as illustrated in FIG. 3, a plurality of through-holes 63 that go through the inner surface and the outer surface are provided in the second member 60. The plurality of through-holes 63 can be disposed, for example, so as to face the plurality of through-holes 43 with the cathode active material layer 30 interposed therebetween.

Here, diameters d1, d2 of the through-holes 43, 63 can be, for example, from 30 $\mu$m to 300 $\mu$m, and also from 100 $\mu$m to 200 $\mu$m. If the diameters d1, d2 are less than 30 $\mu$m, for example, the alkaline aqueous solution 6 is less likely to enter the inside of the through-holes 43, 63. On the other hand, when the diameters d1 and d2 exceed 300 $\mu$m, for example, the active material 31 and other components constituting the cathode active material layer 30 tend to easily leak to the outside.

Note that in FIGS. 3 and 4, the first member 40 and the second member 60 are illustrated as being spaced apart from the cathode active material layer 30, but the present embodiment is not limited to such a configuration, and for example, the through-holes 43, 63 may each protrude toward the cathode active material layer 30 side such that the first member 40 and the second member 60 are in contact with the cathode active material layer 30. When the first member 40 and the second member 60 are in contact with the cathode active material layer 30, it facilitates electric charge transport between the cathode active material layer 30 and the current collector member 80 through the alkaline aqueous solution 6 (see FIG. 1).

[Control Device]

A further description is given with reference again to FIG. 1. The control device 90 controls the charging of the secondary battery 1. The control device 90 includes a controller 91 and a storage unit 92.

The controller 91 includes a computer or various circuits including, for example, a central processing unit (CPU), a read only memory (ROM), a random access memory (RAM), a hard disk drive (HDD), and an input/output port. The CPU of such a computer functions as the controller 91 by, for example, reading and executing the program stored in the ROM.

The controller 91 may also be configured of hardware such as an application specific integrated circuit (ASIC) or a field programmable gate array (FPGA).

The storage unit 92 corresponds to, for example, the ROM and HDD. The ROM and the HDD can store various configuration information in the control device 90. Note that the controller 91 may also acquire various information via another computer or portable recording medium connected by a wired or wireless network.

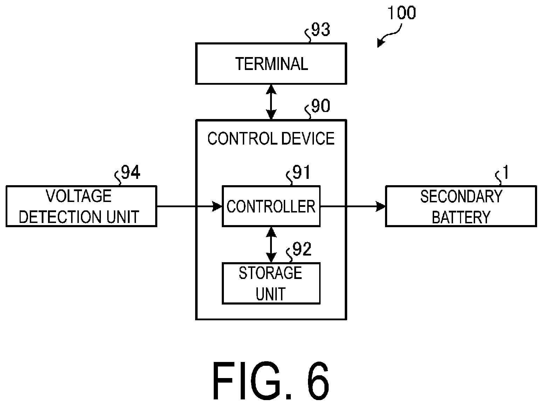

The control device 90 controls the charging of the secondary battery 1 in accordance with the concentrations of potassium and zinc dissolved in the alkaline aqueous solution 6 and the composition of the active material 31 and thus improves the charging capacity. This point will be further described with reference to FIG. 6.

FIG. 6 is a block diagram illustrating a functional configuration of a secondary battery system according to a first embodiment. As illustrated in FIG. 6, the secondary battery system 100 includes a voltage detection unit 94 in addition to the secondary battery 1 and the control device 90 described above.

The voltage detection unit 94 detects a voltage value measured during charging of the secondary battery 1, and transmits information on the voltage value to the controller 91. The controller 91 controls the charging of the secondary battery 1 on the basis of the information sent from the voltage detection unit 94 and the configuration information stored in the storage unit 92.

Specifically, using a state in which discharging is performed until a voltage value between the cathode and a reference electrode becomes -0.1 V or less as reference, the voltage value being measured using an Hg/HgO reference electrode immersed in a 1 mol·dm$^{-3}$ sodium hydroxide aqueous solution, the controller 91 controls charging such that an upper limit of a charge amount [Ah] expressed by a total molar amount of the nickel compound in the active material 31 multiplied by a coefficient A ((total molar amount of nickel compound) x (coefficient A)) is within a range in which the charge amount [Ah] satisfies the following relational expression (1) and equations (2) and (3).

$$32.83 \leq A \leq 38.86 \ldots (1)$$

$$A = (0.5y/(y + 1) + 1) \times 26.8 \ldots (2)$$

$$y = (0.091 \times C_K + 2.160 \times C_{Zn} + 3.217) \times \exp(0.545 \times C_K + 13.147 \times C_{Zn} - 57.197) \times M_{Zn} \ldots (3)$$

In equation (3) above, $C_K$ is the molar concentration (mol·dm$^{-3}$) of potassium ions dissolved in the alkaline aqueous solution 6, Czn is the molar concentration (mol·dm$^{-3}$) of the zinc component dissolved in the alkaline aqueous solution 6, and Mzn is the content (mol%) of the zinc component of the metal elements contained in the active material 31. The controller 91 can control the charging of the secondary battery 1 on the basis of an instruction from a terminal 93.

In this manner, the controller 91 controls charging in accordance with $C_K$, Czn, and Mzn, and thereby the charging/discharging reaction between $\alpha$-Ni(OH)$_2 \Leftrightarrow \gamma$-NiOOH can be repeated at the cathode 2. Thus, with the secondary battery system 100 according to the first embodiment, the charging capacity can be improved over a long period of time.

Note that in relational expression (1) described above, when A is less than 32.83, for example, the effect of improving the charging capacity through $\alpha$-Ni(OH)$_2$ and $\gamma$-NiOOH is reduced, and it may be difficult to control the voltage of the secondary battery 1. In addition, when A is greater than 38.86, the volume change rate of the cathode active material layer 30 containing the active material 31 may increase in association with charging and discharging, and for example, battery performance tends to deteriorate with repeated charging and discharging.

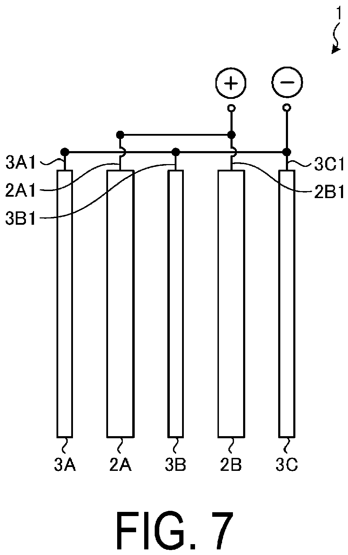

Next, the connection between the electrodes in the secondary battery 1 will be described. FIG. 7 is a diagram illustrating an example of a connection between electrodes of the secondary battery or the secondary battery system according to the first embodiment.

As illustrated in FIG. 7, the anodes 3A to 3C are connected in parallel through tabs 3A1 to 3C1. Additionally, the cathodes 2A and 2B are connected in parallel through tabs 2A1, 2B1. By connecting the anodes 3 in parallel and the cathodes 2 in parallel respectively in this manner, each of the electrodes of the secondary battery 1 can be appropriately connected and used even when the total number of the cathodes 2 differs from the total number of the anodes 3.

Note that in the embodiment described above, a total of five electrodes are arranged with the anodes 3 and the cathodes 2 being alternately arranged, but the present embodiment is not limited thereto, and three or seven or more electrodes may be alternately arranged. Furthermore, in the embodiment described above, the electrodes are arranged such that anodes 3 are present at both ends, but the present embodiment is not limited thereto, and the electrodes may be arranged such that cathodes 2 are present at both ends. Furthermore, the same number of anodes 3 and cathodes 2 may be alternately disposed so that one end is a cathode 2 and the other end is an anode 3. Additionally, one cathode 2 and one anode 3 may be disposed.

Second Embodiment

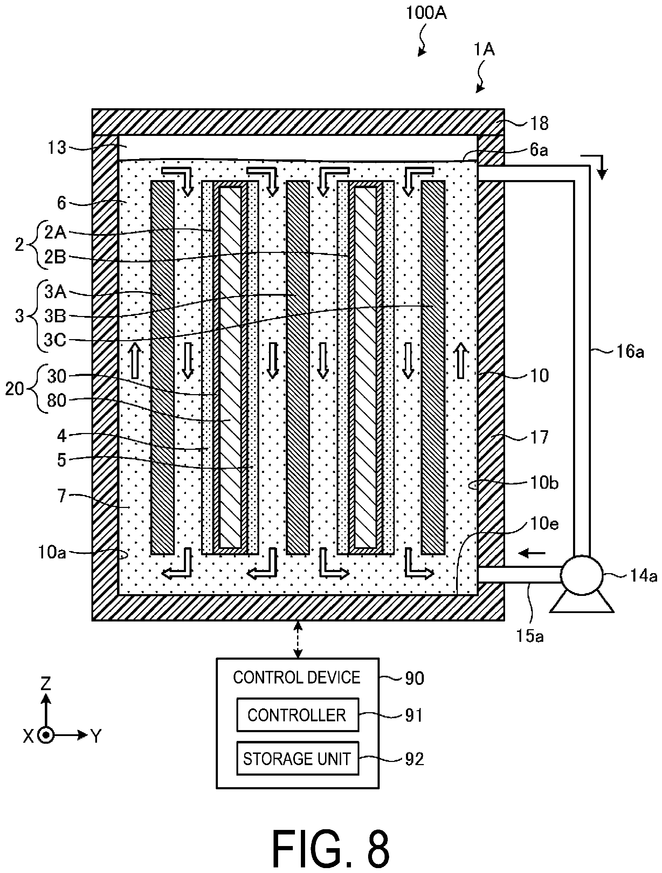

FIG. 8 is a diagram illustrating an overview of a secondary battery system according to a second embodiment. The secondary battery 1 included in the secondary battery system 100A illustrated in FIG. 8 has the same configuration as that of the secondary battery 1 according to the first embodiment with the exception that a supply unit 14a and piping 15a, 16a are provided instead of the generation unit 9, the supply unit 14, and the piping 15, 16 illustrated in FIG. 1.

The supply unit 14a supplies an alkaline aqueous solution 6, in which a powder 7 is mixed, to a lower portion of the casing 17 through the piping 15a, the alkaline aqueous solution 6 being collected from the interior of the casing 17 through the piping 16a. The supply unit 14a is an example of a flow device.

The supply unit 14a is, for example, a pump capable of transferring the alkaline aqueous solution 6. When the supply unit 14a has better air-tightness, the secondary battery 1A is resistant to reduction in the power generation performance, which may be caused by leakage to the outside of the powder 7 and the alkaline aqueous solution 6. Furthermore, similar to the secondary battery 1 according to the first embodiment, the alkaline aqueous solution 6 sent to the inside of the casing 17 is supplied to a charging/discharging reaction while flowing between the electrodes.

Note that with the secondary battery 1A illustrated in FIG. 8, an opening connected to the piping 16a is provided at an inner wall 10b facing the main surface of each electrode, that is, an opening is provided at an end portion in the Y-axis direction of the reaction unit 10. However, the present embodiment is not limited thereto, and the opening may be provided at the end portion in the X-axis direction.

With the secondary battery 1A illustrated in FIG. 8, the supply unit 14a supplies, to the casing 17, the alkaline aqueous solution 6 in which the powder 7 is mixed. However, the present embodiment is not limited thereto, and the supply unit 14a supplies the alkaline aqueous solution 6 alone. In such a case, a tank for temporarily storing the alkaline aqueous solution 6 in which the powder 7 is mixed may be provided midway along the piping 16a, for example, and the concentration of the complex ions dissolved in the alkaline aqueous solution 6 may be adjusted inside the tank.

Embodiments according to the present invention were described above. However, the present invention is not limited to the embodiments described above, and various modifications can be made without departing from the essential spirit of the present invention. For example, in each of the embodiments described above, the supply unit 14 or the supply unit 14a indicated as one example of a flow device was described as a mode for causing the alkaline aqueous solution 6 to flow. However, the present invention is not limited thereto, and may be configured without a flow device.

Moreover, in the embodiments described above, the diaphragms 4, 5 were described as being arranged so as to sandwich the cathode 2 from both sides in the thickness direction. However, the diaphragms 4, 5 are not limited thereto, and may cover the cathode 2. Also, the diaphragms 4, 5 do not necessarily have to be arranged therein.

Additional effects and variations can be easily derived by a person skilled in the art. Thus, a wide variety of aspects of the present invention are not limited to the specific details and representative embodiments represented and described above. Accordingly, various changes are possible without departing from the spirit or scope of the general inventive concepts defined by the appended claims and their equivalents.

Reference Signs List

1, 1A: Secondary battery
2, 2A, 2B: Cathode
3, 3A, 3Bb, 3C: Anode
4, 5: Diaphragm
6: Alkaline aqueous solution
7: Powder
8: Gas bubble
9: Generation unit
9a: Discharge port
10: Reaction unit
14: Supply unit
17: Casing
18: Upper plate
20: Cathode structure
30: Cathode active material layer
31: Active material
80: Current collector member
90: Control Device
91: Controller
100, 100A: Secondary battery system

**Claims**

1.  A secondary battery comprising:

    a cathode including an active material containing a nickel compound;
    an anode; and
    an alkaline aqueous solution which is in contact with the cathode and the anode and containing complex ions; wherein
    a product of a valence and a molar amount per 1 $dm^3$ of the complex ions is -2.0 or less.

2.  The secondary battery according to claim 1, wherein the nickel compound includes at least two or more selected from $\alpha$-nickel hydroxide, $\beta$-nickel hydroxide, $\beta$-nickel oxyhydroxide, or $\gamma$-nickel oxyhydroxide, and a relationship in terms of contents of the $\alpha$-nickel hydroxide, the $\beta$-nickel hydroxide, the $\beta$-nickel oxyhydroxide, and the $\gamma$-nickel oxyhydroxide satisfies any one of Relational Expressions 1 to 4:

    Relational Expression 1: $\alpha$-nickel hydroxide > $\beta$-nickel hydroxide
    Relational Expression 2: $\alpha$-nickel hydroxide > $\beta$-nickel oxyhydroxide

Relational Expression 3: γ-nickel oxyhydroxide > β-nickel oxyhydroxide
Relational Expression 4: γ-nickel oxyhydroxide > β-nickel hydroxide.

3. The secondary battery according to claim 1, wherein the active material further includes a metal element besides nickel, and
a content of the metal element is 10 mol% or less.

4. The secondary battery according to claim 3, wherein the metal element includes at least one or more of magnesium, cadmium, or zinc.

5. The secondary battery according to any one of claims 1 to 4, wherein the complex ions are hydroxide complex ions.

6. The secondary battery according to any one of claims 1 to 5, wherein the complex ions include one or more of Zn, Al, Sn, Ga, Pb, In, Bi, and Ge.

7. The secondary battery according to any one of claims 1 to 6, further comprising a flow device configured to cause the alkaline aqueous solution to flow.

8. The secondary battery according to any one of claims 1 to 7, wherein the alkaline aqueous solution includes a zinc component.

9. A secondary battery system comprising:

the secondary battery described in any one of claims 1 to 8; and
a controller configured to control the secondary battery; wherein
the controller is configured to control a voltage at the time of charging on the basis of concentrations of potassium and zinc dissolved in the alkaline aqueous solution and a composition of the active material.

10. The secondary battery system according to claim 9, wherein

on the basis of a voltage value in a discharged state, the voltage value being measured using a reference voltage, the controller is configured to control charging such that an upper limit of a charge amount [Ah] is within a range that satisfies Relational Expression (1) and Equations (2) and (3), the charge amount [Ah] being expressed by a total molar amount of nickel in the nickel compound multiplied by a coefficient A:

$$32.83 \leq A \leq 38.86 \ ... \ (1)$$

$$A = (0.5y/(y + 1) + 1) \times 26.8 \ ... \ (2)$$

$$y = (0.091 \ x \ C_K + 2.160 \ x \ C_{Zn} + 3.217) \ x \ exp(0.545 \ x \ C_K + 13.147 \ x \ C_{Zn} - 57.197) \ x \ M_{Zn} ... \ (3)$$

provided that,
$C_K$: molar concentration (mol·dm$^{-3}$) of potassium ions dissolved in the alkaline aqueous solution,
Czn: molar concentration (mol·dm$^{-3}$) of the zinc component dissolved in the alkaline aqueous solution, and
Mzn: content (mol%) of the zinc component of the metal elements contained in the active material.

FIG. 1

FIG. 2

FIG. 3

FIG. 4

(NICKEL HYDROXIDE)                          (NICKEL OXYHYDROXIDE)

$\beta - Ni(OH)_2$      DISCHARGE ←       $\beta - NiOOH$

               → CHARGE

↑ LEFT STANDING            ↓ OVERCHARGE

(UNSTABLE) $\alpha - Ni(OH)_2$      DISCHARGE ←      $\gamma - NiOOH$

               → CHARGE

# FIG. 5

100

93
TERMINAL

90
CONTROL DEVICE

94
VOLTAGE
DETECTION UNIT

91
CONTROLLER

1
SECONDARY
BATTERY

92
STORAGE
UNIT

FIG. 6

FIG. 7

FIG. 8

## INTERNATIONAL SEARCH REPORT

| International application No. |
| --- |
| PCT/JP2020/017866 |

**A. CLASSIFICATION OF SUBJECT MATTER**
H01M 4/52(2010.01)i; H01M 10/30(2006.01)i; H01M 10/44(2006.01)i; H01M 10/48(2006.01)i; H01M 2/38(2006.01)i
FI: H01M10/30 A; H01M4/52; H01M10/30 Z; H01M10/44 101; H01M10/48 P; H01M2/38 A
According to International Patent Classification (IPC) or to both national classification and IPC

**B. FIELDS SEARCHED**

Minimum documentation searched (classification system followed by classification symbols)
H01M4/52; H01M10/30; H01M10/44; H01M10/48; H01M2/38

Documentation searched other than minimum documentation to the extent that such documents are included in the fields searched
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2017/209100 A1 (KYOCERA CORP.) 07.12.2017 (2017-12-07) claims 1, 8-9, paragraphs [0012]-[0020] | 1, 5-8 |
| Y | claims 1, 8-9, paragraphs [0012]-[0020] | 2-4 |
| A | claims 1, 8-9, paragraphs [0012]-[0020] | 9-10 |
| X | JP 2003-151569 A (SONY CORP.) 23.05.2003 (2003-05-23) claims 7, 11, paragraphs [0037]-[0038], [0063], [0081] | 1, 5-6, 8 |
| Y | claims 7, 11, paragraphs [0037]-[0038], [0063], [0081] | 2-4 |
| A | claims 7, 11, paragraphs [0037]-[0038], [0063], [0081] | 7, 9-10 |

☒ Further documents are listed in the continuation of Box C.  ☒ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 08 July 2020 (08.07.2020) | 28 July 2020 (28.07.2020) |

| Name and mailing address of the ISA/ Japan Patent Office 3-4-3, Kasumigaseki, Chiyoda-ku, Tokyo 100-8915, Japan | Authorized officer |
| --- | --- |
| | Telephone No. |

Form PCT/ISA/210 (second sheet) (January 2015)

**INTERNATIONAL SEARCH REPORT**

International application No.

PCT/JP2020/017866

C (Continuation).  DOCUMENTS CONSIDERED TO BE RELEVANT

| Category* | Citation of document, with indication, where appropriate, of the relevant passages | Relevant to claim No. |
|---|---|---|
| X | US 2013/0113431 A1 (BANERJEE, Sanjoy) 09.05.2013 (2013-05-09) paragraphs [0039], [0056], fig. 14 | 1, 5-8 |
| Y | paragraphs [0039], [0056], fig. 14 | 2-4 |
| A | paragraphs [0039], [0056], fig. 14 | 9-10 |
| Y | JP 2014-82195 A (GS YUASA INTERNATIONAL LTD.) 08.05.2014 (2014-05-08) claim 1, paragraph [0007] | 2-4 |

Form PCT/ISA/210 (continuation of second sheet) (January 2015)

| International application No. |
| --- |
| PCT/JP2020/017866 |

| Patent Documents referred in the Report | Publication Date | Patent Family | Publication Date |
| --- | --- | --- | --- |
| WO 2017/209100 A1 | 07 Dec. 2017 | EP 3467932 A1 claims 1, 8-9, paragraphs [0012]-[0020] CN 109314285 A | |
| JP 2003-151569 A | 23 May 2003 | (Family: none) | |
| US 2013/0113431 A1 | 09 May 2013 | WO 2011/047105 A1 | |
| JP 2014-82195 A | 08 May 2014 | JP 2014-199798 A US 2014/0093777 A1 claim 1, paragraph [0013] US 2014/0093776 A1 EP 2713425 A1 EP 2713428 A1 CN 103715398 A CN 103715419 A | |

Form PCT/ISA/210 (patent family annex) (January 2015)

**EP 3 961 767 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015173068 A